# EUROPEAN PATENT APPLICATION

(11) **EP 4 492 516 A1**
(43) Date of publication of application: **15.01.2025**
(21) Application number: 24181218.9
(22) Date of filing: 10.06.2024
(51) Int. Cl.: H01M 10/04, H01M 50/209, H01M 50/242, H01M 50/293

(54) **BATTERY MODULE**

(30) Priority: 14.07.2023 KR 20230091505
(71) Applicant: Samsung SDI Co., Ltd., Yongin-si, Gyeonggi-do 17084 (KR)
(72) Inventor: MOON, Young Sik, 17084 Yongin-si (KR); CHOI, Seon Ung, 17084 Yongin-si (KR)
(74) Representative: Marks & Clerk LLP

(57) **Abstract**

Disclosed is a battery module including battery cells aligned in a first direction, a pair of end plates respectively outside outermost battery cells among the battery cells, a pair of sub-end plates between respective ones of the end plates and the outermost battery cells, and elastic members respectively between the end plates and the sub-end plates to elastically support the end plates and the sub-end plates.

## Description

### BACKGROUND

### 1. Field

Embodiments of the present disclosure relate to a battery module that can maintain appropriate pressure between cells.

### 2. Description of the Related Art

A battery module may include a plurality of battery cells arranged in one direction. The plurality of battery cells may be configured to be connected in series or in parallel depending on what output voltage or charge/discharge capacity is suitable.

Gas may be generated by chemical reactions during charging and discharging of battery cells. As the cycle progresses, a so-called swelling phenomenon, in which the width of the battery cell increases due to gases generated, may occur. As one of the methods for suppressing swelling, a method was introduced in which end plates of a battery module restrain the battery cells in the swelling direction. In one or more embodiments, as the cycle progresses, the pressure applied to the battery cell gradually increases, and it may be difficult to maintain appropriate pressure between battery cells evenly from the beginning to the end of battery life. In one or more embodiments, because the swelling pressure is desirably tolerated by means of only the end plate, it is desirable to increase the thickness of the end plate, and it may be difficult to compactly configure a battery module, resulting in an increase in manufacturing costs.

The above information disclosed in this Background section is only for enhancement of understanding of the background of the disclosure, and therefore it may contain information that does not constitute prior art.

### SUMMARY

Embodiments of the present disclosure provide a battery module that can control displacement and load changes due to swelling of battery cells by reducing the thickness of an end plate without arranging a separate buffer member between the battery cells.

A battery module according to one or more embodiments of the present disclosure may include battery cells aligned in a first direction, a pair of end plates respectively outside outermost battery cells among the battery cells, a pair of sub-end plates between respective ones of the end plates and the outermost battery cells, and elastic members respectively between the end plates and the sub-end plates to elastically support the end plates and the sub-end plates.

The battery module may further include a pair of side plates facing each other along a second direction that is perpendicular to the first direction.

The end plates and the side plates may have a rectangular plate shape.

The battery module may further include elastic-member-receiving portions one of the end plates or the sub-end plates for receiving first ends of the elastic members, wherein another one of the end plates or the sub-end plates defines grooves for seating second ends of the elastic members.

The elastic members may include disk springs that are convex.

The elastic members may be arranged in an odd number, or in an even number.

Each of the elastic members may include two or more of the disk springs.

The two or more of the disk springs may face a same direction.

The two or more of the disk springs may face different directions.

The two or more of the disk springs may include pairs of the disk springs respectively facing opposite directions.

The two or more of the disk springs may include a first pair of the disk springs overlapping and facing one direction, and a second pair of the disk springs overlapping and facing another direction that is opposite to the one direction, and stacked with the first pair of the disk springs.

At least some of the above and other features of the invention are set out in the claims.

### BRIEF DESCRIPTION OF DRAWINGS

FIG. 1 is a schematic perspective view of a battery module according to one or more embodiments of the present disclosure.
FIG. 2 is a plan view of another battery module according to one or more embodiments of the present disclosure.
FIG. 3 is an exploded perspective view of a battery module according to one or more embodiments of the present disclosure.
FIG. 4 is an exploded perspective view of end plates, sub-end plates, and elastic members of a battery module according to one or more embodiments of the present disclosure.
FIG. 5 is a cross-sectional view of an elastic member of a battery module according to one or more embodiments of the present disclosure.
FIG. 6 is a cross-sectional view of an elastic member of a battery module according to one or more other embodiments of the present disclosure.
FIG. 7 is a cross-sectional view of an elastic member of a battery module according to one or more other embodiments of the present disclosure.
FIG. 8 is a cross-sectional view of an elastic member of a battery module according to one or more other embodiments of the present disclosure.
FIG. 9 is an exploded perspective view of an end plate, a sub-end plate, and an elastic member of a battery module according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions, such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions, such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a battery module according to one or more embodiments of the present disclosure will be described in detail with reference to the attached drawings.

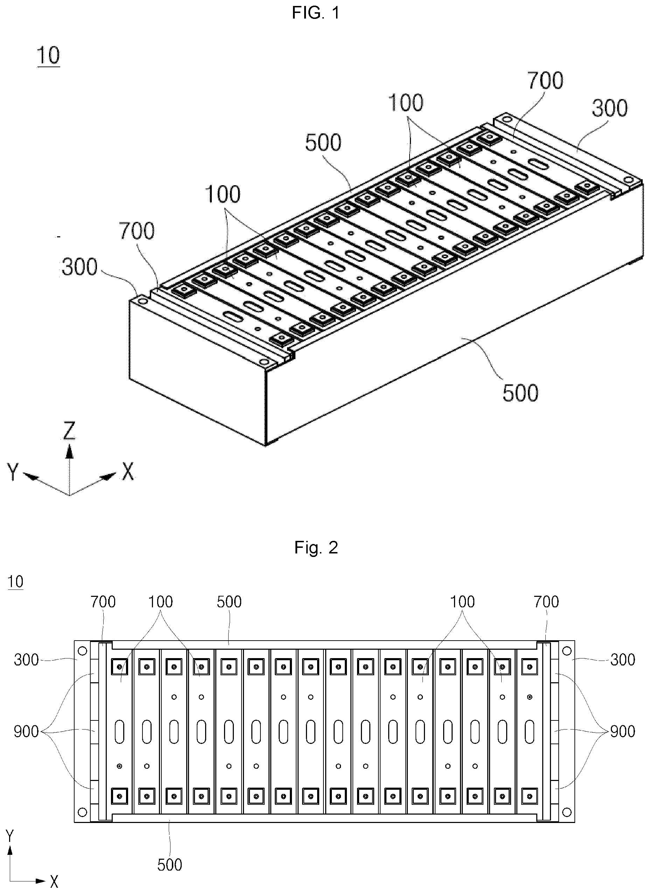

Referring to FIGS. 1 to 3, the battery module 10 according to one or more embodiments of the present disclosure may include a plurality of battery cells 100, a pair of end plates 300, and a pair of side plates 500. In one or more embodiments, the battery module 10 may further include a top cover, a bottom plate, a bus bar, and a circuit board. In addition, sub-end plates 700 may be located between the end plates 300 and the battery cells 100. A plurality of elastic members 900 may be provided between the end plates 300 and the sub-end plates 700.

The battery cell 100 has a rectangular parallelepiped shape, and a plurality of battery cells 100 may be aligned in a direction (e.g., a predetermined direction). In one or more embodiments, the respective battery cells 100 may be arranged so that relatively wide plate surfaces face each other.

Each of the battery cells 100 may include a rectangular parallelepiped-shaped case, an electrode assembly accommodated with an electrolyte inside the case, and a cell cap for sealing the case.

The electrode assembly may be formed by sequentially winding or stacking a negative electrode plate, a separator, and a positive electrode plate. A negative electrode active material, such as graphite or carbon, may be applied or coated on a negative electrode plate formed of a metal foil, such as copper, a copper alloy, nickel, or a nickel alloy. A positive electrode active material, such as a transition metal oxide, may be applied or coated on a positive electrode plate formed of a metal foil, such as aluminum or an aluminum alloy. An uncoated portion may be formed in a region where an active material is not applied to each of the negative electrode plate and the positive electrode plate. A negative electrode tab may be connected to the negative electrode uncoated portion, and a positive electrode tab may be connected to the positive electrode uncoated portion. The connected negative and positive electrode tabs may be electrically connected to negative and positive electrode terminals formed on a cell cap, respectively. The negative electrode terminal and positive electrode terminal formed on the cell cap may be electrically connected to a bus bar.

The pair of end plates 300 and the pair of side plates 500, which act as a cell frame for aligning the battery cells 100, may be provided. The pair of end plates 300 are located outside the respective outermost battery cells 100 in the direction in which the battery cells 100 are aligned, for example, along the X-axis direction in FIG. 1. The pair of side plates 500 are perpendicular to the end plates 300. The pair of end plates 300 face each other with the battery cells 100 therebetween. The pair of side plates 500 face each other along the Y-axis direction in FIG. 1 with the battery cells 100 therebetween. In one or more embodiments, the bus bar, a bus bar holder for supporting the bus bar, and the circuit board may be placed on the battery cells 100, and the top cover may be placed thereon. In one or more embodiments, the bottom plate may be located below the battery cells 100, and the pair of end plates 300, the pair of side plates 500, the bottom plate, and the top cover may be combined to form a case having a substantially rectangular parallelepiped shape, and the battery cells 100, the bus bar, the bus bar holder, and the circuit board may be stored therein.

Referring to FIGS. 1 to 3, the pair of sub-end plates 700 are respectively located between the end plates 300 and the corresponding outermost battery cells 100 among the battery cells 100. The sub-end plates 700 may contact the outer surface of the outermost battery cell 100. The end plates 300 may face the sub-end plates 700.

The end plates 300 and sub-end plates 700 may have a square or rectangular plate shape. The shape of the end plates 300 and the sub-end plates 700 may substantially correspond to the square or rectangular shape forming the side surface of the battery cells 100.

The plurality of elastic members 900 are inserted between the end plates 300 and the sub-end plates 700. The end plates 300 and the sub-end plates 700 are elastically supported against each other by means of the plurality of elastic members 900. The end plates 300 may be configured to be fixed in the direction in which the battery cells 100 are aligned, for example, in the X-axis direction in FIG. 1. As an example, the end plates 300 may be configured to restrict movement in the alignment direction of the battery cells 100 through combination with the side plates 500. The sub-end plates 700 may be configured to be movable in the direction in which the battery cells 100 are aligned. In comparative examples, the sub-end plates 700 may be merely interposed between the end plates 300 and the battery cells 100 while not being fixed, and if swelling of the battery cells 100 occurs, displacement of the sub-end plates 700 may occur depending on the swelling direction. In one or more embodiments, the degree of compression of the elastic members 900 changes depending on the displacement of the sub-end plates 700.

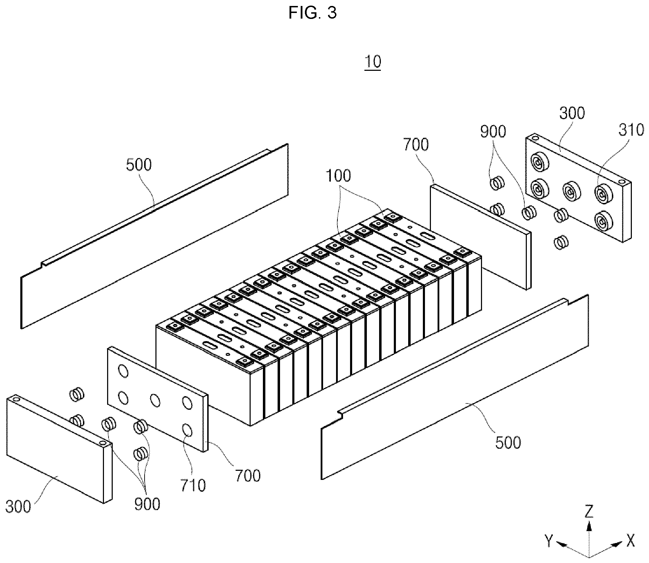

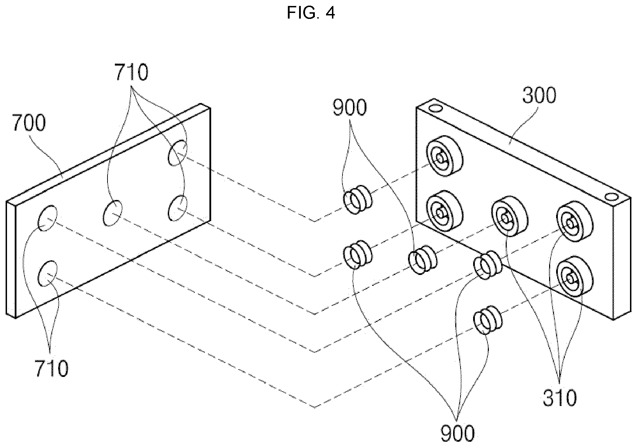

The elastic members 900 may be provided in odd or even numbers. FIGS. 3 and 4 show, by way of example, a case in which five elastic members 900 are provided, although the number and arrangement of the elastic members 900 are not limited thereto. For example, according to other embodiments of the present disclosure, an even number of elastic members, such as 6 or 8, may be provided.

First ends of the elastic members 900 are supported by the sub-end plates 700, and second ends thereof are supported by the end plates 300. As shown in FIG. 4, elastic-member-receiving portions 310, which may be substantially cylindrical, may be formed on the end plates 300 to receive the first ends of the elastic members 900. Circular grooves 710, in which second ends of the elastic members 900 are seated, may be formed in the sub-end plates 700. The first ends of the elastic members 900 may be supported on the end plates 300 in a state of being inserted into the elastic-member-receiving portions 310, and the second ends thereof may be supported on the sub-end plates 700 in a state of being located in the circular grooves 710, and both ends of the elastic members 900 can be supported in a state of being more firmly seated on the end plates 300 and the sub-end plates 700.

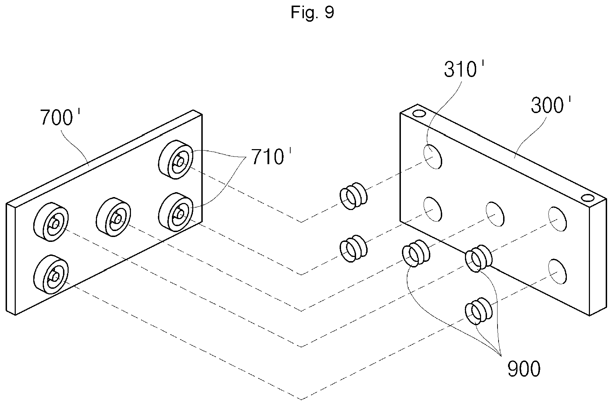

In one or more other embodiments, and as shown in FIG. 9, elastic-member-receiving portions 710' may be formed in sub-end plates 700', and circular grooves 310' may be formed in the end plates 300'.

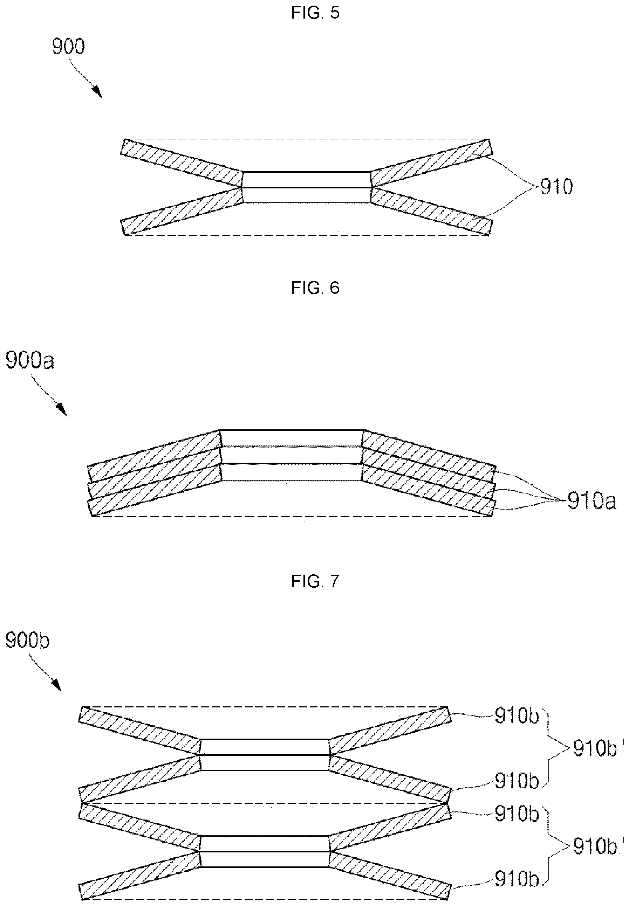

Referring to FIG. 5, an elastic member 900 may comprise a circular disk spring 910 that is convex in one direction. One elastic member 900 may be composed of a plurality of disk springs 910. For example, FIG. 5 shows a case where one elastic member 900 is composed of two disk springs 910, by way of example. In one or more embodiments, as shown in FIG. 5, the disk springs 910 may be stacked in opposite directions. In one or more embodiments, two disk springs 910 may be stacked so that convex portions of the disk springs 910 contact each other to form the elastic member 900.

FIGS. 6 to 8 show elastic members according to other embodiments of the present disclosure. As shown in FIG. 6, an elastic member 900a may be located so that a plurality of disk springs 910a overlap in the same direction.

In one or more embodiments, as shown in FIG. 7, an elastic member 900b may be formed by stacking a plurality of pairs 910b' composed of disk springs 910b stacked in opposite directions. In one or more embodiments, the elastic member 900b according to the one or more embodiments corresponding to FIG. 7 is configured, such that the plurality of elastic members 900 of FIG. 5 are stacked.

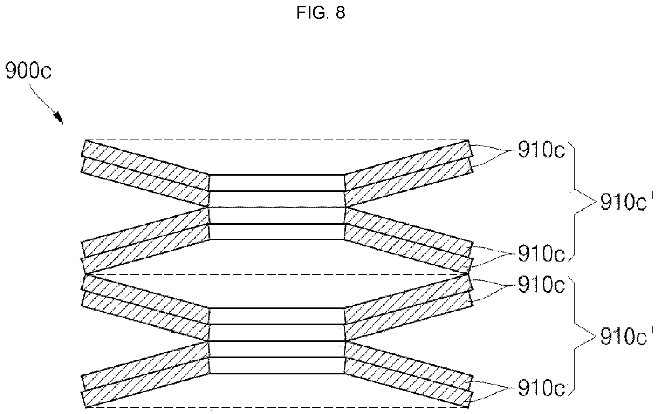

In one or more embodiments, as shown in FIG. 8, an elastic member 900c may be formed by stacking a plurality of pairs 910c' in which two overlapping disk springs 910c are stacked in different directions.

As described above, the displacement and load of the battery cells and the sub-end plates can be controlled by various combinations of the number of disk springs, stacking directions, etc. In one or more embodiments, the appropriate pressure of the cells within the battery module can be maintained, and the lifespan of the battery cells can be preserved or expanded. In one or more embodiments, it is possible to reduce or prevent the likelihood of breakage of a can and a cell cap due to swelling of the battery cells.

In the elastic members 900 of the above-described embodiments, the battery cells 100 may be located so that the compression and restoration direction thereof is the same as the alignment direction thereof.

In one or more embodiments, in general use environments, the restoring force of the elastic members 900 is applied in a direction in which the battery cells 100 are pressurized. If the battery cells 100 swell due to charging of the battery cells 100, the swelling force may increase. In one or more embodiments, the direction in which the battery cells 100 swell is directed toward the end plates 300, and if the battery cells 100 swell, the swelling force is transmitted to the sub-end plates 700. The swelling force transmitted to the sub-end plates 700 may be absorbed by the elastic members 900, and may be maintained to be constant. In one or more embodiments, because the swelling force is not transmitted to the end plates 300, the end plates 300 and the side plates 500 may be maintained in a fixed state. In addition, although the elastic members 900 are compressed by the swelling force, the force supporting the battery cells 100 may be greater than only the end plates 300 being provided, and the thickness of the end plates 300 for restraining the battery cells 100 may be reduced. The installation space for the elastic members 900 and the sub-end plates 700 can be secured by the reduction in the thickness of the end plates 300, and the swelling force may be absorbed without increasing the size of the battery module 10.

In one or more embodiments, if the swelling of the battery cells 100 is reduced due to discharging of the battery cells 100, the swelling force transmitted to the elastic members 900 decreases, and the compressed elastic members 900 may be restored, and the battery cells 100 may be pressurized.

In this way, if there is no swelling, the elastic members 900 pressurize and support the battery cells 100. If swelling occurs, the elastic members 900 absorb the swelling force and support the battery cells 100. In one or more embodiments, because the elastic members 900 always support the battery cells 100 if the swelling of the battery cells 100 increases or decreases, the plurality of battery cells 100 can be maintained in a state of being in close contact with each other without being spaced apart from each other, and the buffer member between cells can be eliminated and an internal space can be secured, thereby increasing the capacity of the battery cells 100.

As described above, according to embodiments of the present disclosure, it may be possible to control displacement and load changes due to swelling of battery cells by reducing the thickness of an end plate without arranging a separate buffer member between the battery cells.

While the foregoing has been described to practice the battery module according to the present disclosure, it should be understood that the embodiments described herein should be considered in a descriptive sense only and not for purposes of limitation, and various changes in form and details may be made therein without departing from the scope of the disclosure as defined by the following claims, with functional equivalents thereof to be included therein.

Embodiments are set out in the following clauses.
1. A battery module comprising:
   battery cells aligned in a first direction;
   a pair of end plates respectively outside outermost battery cells among the battery cells;
   a pair of sub-end plates between respective ones of the end plates and the outermost battery cells; and
   elastic members respectively between the end plates and the sub-end plates to elastically support the end plates and the sub-end plates.
2. The battery module according to clause 1, further comprising a pair of side plates facing each other along a second direction that is perpendicular to the first direction.
3. The battery module according to clause 1 or 2, wherein the end plates and the side plates have a rectangular plate shape.
4. The battery module according to clause 1, 2, or 3, further comprising elastic-member-receiving portions one of the end plates or the sub-end plates for receiving first ends of the elastic members,
   wherein another one of the end plates or the sub-end plates defines grooves for seating second ends of the elastic members.
5. The battery module according to any preceding clause, wherein the elastic members comprise disk springs that are convex.
6. The battery module according to any preceding clause, wherein the elastic members are arranged in an odd number.
7. The battery module according to any one of clauses 1 to 5, wherein the elastic members are arranged in an even number.
8. The battery module according to clause 5 or any clause dependent on clause 5, wherein each of the elastic members comprises two or more of the disk springs.
9. The battery module according to clause 8, wherein the two or more of the disk springs face a same direction.
10. The battery module according to clause 8, wherein the two or more of the disk springs face different directions.
11. The battery module according to clause 8, wherein the two or more of the disk springs comprises pairs of the disk springs respectively facing opposite directions.
12. The battery module according to clause 8, wherein the two or more of the disk springs comprise a first pair of the disk springs overlapping and facing one direction, and a second pair of the disk springs overlapping and facing another direction that is opposite to the one direction, and stacked with the first pair of the disk springs.
13. The battery module according to any preceding clause, wherein the elastic members are arranged in an odd number.
14. The battery module according to any preceding clause, wherein the elastic members are arranged in an even number.

## Claims

1. A battery module comprising:
battery cells aligned in a first direction;
a pair of end plates respectively outside outermost battery cells among the battery cells;
a pair of sub-end plates between respective ones of the end plates and the outermost battery cells; and
elastic members respectively between the end plates and the sub-end plates to elastically support the end plates and the sub-end plates.

2. The battery module as claimed in claim 1, further comprising a pair of side plates facing each other along a second direction that is perpendicular to the first direction.

3. The battery module as claimed in claim 1 or 2, wherein the end plates and the sub-end plates have a rectangular plate shape.

4. The battery module as claimed in claim 1, 2 or 3, further comprising elastic-member-receiving portions on or in one of the end plates or the sub-end plates for receiving first ends of the elastic members,
wherein another one of the end plates or the sub-end plates defines grooves for seating second ends of the elastic members.

5. The battery module as claimed in any preceding claim, wherein the elastic members comprise disk springs that are convex.

6. The battery module as claimed in any preceding claim, wherein the elastic members are arranged in an odd number.

7. The battery module as claimed in any one of claims 1 to 5, wherein the elastic members are arranged in an even number.

8. The battery module as claimed in claim 5 or any claim dependent on claim 5, wherein each of the elastic members comprises two or more of the disk springs.

9. The battery module as claimed in claim 8, wherein the two or more of the disk springs face a same direction.

10. The battery module as claimed in claim 8, wherein the two or more of the disk springs face different directions.

11. The battery module as claimed in claim 8, wherein the two or more of the disk springs comprises pairs of the disk springs respectively facing opposite directions.

12. The battery module as claimed in claim 8, wherein the two or more of the disk springs comprise a first pair of the disk springs overlapping and facing one direction, and a second pair of the disk springs overlapping and facing another direction that is opposite to the one direction, and stacked with the first pair of the disk springs.
